# EUROPÄISCHE PATENTSCHRIFT

(11) **EP 1 804 026 B1**
(45) Veröffentlichungstag und Bekanntmachung des Hinweises auf die Patenterteilung: **08.01.2014**
(21) Anmeldenummer: 06124468.7
(22) Anmeldetag: 21.11.2006
(51) Int. Cl.: G01C 21/36

(54) **Verfahren zur Auswahl eines Ortes**
Method for selecting a location
Procédé destiné à la sélection d'un emplacement

(30) Priorität: 27.12.2005 DE 102005062465
(43) Veröffentlichungstag der Anmeldung: 04.07.2007
(73) Patentinhaber: ROBERT BOSCH GMBH, 70442 Stuttgart (DE)
(72) Erfinder: Lueer, Stefan, 31139, Hildesheim (DE); Kleine-Besten, Thomas, 38116, Braunschweig (DE); Jungk, Andreas, 73733, Esslingen (DE)

(56) Entgegenhaltungen:
- EP-A1- 0 790 593
- EP-A2- 1 120 633
- WO-A1-03/067193

## Beschreibung

### Stand der Technik

Die Erfindung geht aus von einem Verfahren zur Auswahl eines Ortes nach der Gattung des Hauptanspruchs. Aus der EP 0 790 593 A1 ist bereits ein Verfahren und eine Vorrichtung zur Auswahl von Fahrzielen in einem Navigationssystem bekannt. Hierzu werden in einer Anzeige unter anderem zwei Listen dargestellt, aus denen ein Benutzer ein Fahrziel auswählen kann. Die zweite Liste enthält Fahrziele, die zuvor einmal aus der ersten Liste ausgewählt worden sind. Somit kann ein Benutzer entweder ein zuvor angefahrenes Fahrziel aus der zweiten Liste auswählen oder er kann eine alphabetische Eingabe vornehmen, um ein Fahrziel aus der Gesamtheit von Fahrzielen der ersten Liste auszuwählen.

Die Erfindung ist durch das Verfahren des Anspruchs 1 und die Vorrichtung des Anspruchs 12 definiert.

### Vorteile der Erfindung

Das erfindungsgemäße Verfahren zur Eingabe eines Ortes und die erfindungsgemäße Vorrichtung zur Verarbeitung einer Ortsinformation haben den Vorteil, dass zwei Listen, deren Einträge sich aus unterschiedlichen Grundmengen speisen, in einer Anzeige dargestellt werden, wobei jedoch dargestellte Listeneinträge mit dem Anfang ihres Namens mit einer zuvor eingegebenen Zeichenkette in den beiden Listen übereinstimmen müssen. Damit wird es ermöglicht, mit der alphabetischen Eingabe aus verschiedenen Mengen von Orten durch die Eingabe einer Zeichenkette gleichzeitig eine Auswahl zu treffen und damit die Eingabe zu vereinfachen.

Aus der EP 1120633 A2 ist ein Verfahren zur Informationseingabe in ein elektrisches Gerät bekannt, bei dem nach Eingabe eines Zeichens des Alphabets das Zeichen, oder für den Fall, dass vor dem eingegebenen Zeichen bereits ein oder mehrere Zeichen eingegeben worden sind, die aus den zuvor und dem zuletzt eingegebenen Zeichen gebildete Zeichenkette mit Informationen einer Vergleichsmenge von Informationen verglichen wird, und bei Übereinstimmung des Zeichens mit dem ersten Zeichen einer Information der Vergleichsmenge oder bei Übereinstimmung der Zeichenkette mit dem Beginn einer Information der Vergleichsmenge diese Information als einzugebende Information angeboten wird.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist es, dass die Grundmenge der Orte, aus der die Einträge in der zweiten Liste bestimmt werden, eine Teilmenge der Grundmenge der Orte in der ersten Liste ist. Durch eine geeignete Vorauswahl der Orte in der zweiten Liste kann dabei die Eingabezeit für einen Ort, den ein Benutzter mit einer hohen Wahrscheinlichkeit auswählen will, aufgrund der kleineren Grundmenge der Orte der zweiten Liste verringert werden. Zugleich wird es ermöglicht, dass die Auswahl eines Ortes, der nicht zu dieser Teilmenge gehört, im Vergleich zu einer unmittelbaren Auswahl aus nur einer Liste ohne zusätzlichen Aufwand ausgewählt werden kann.

Weiterhin ist es vorteilhaft, die Grundmenge der Einträge wenigstens einer Liste in Abhängigkeit von einer Eigenschaft des jeweiligen Ortes oder von einer zuvor getätigten Eingabe eines Benutzers zu wählen. Damit weist eine der Listen bevorzugt derartige Einträge auf, die ein Benutzer mit einer hohen Wahrscheinlichkeit auswählen wird. Insbesondere für den Fall, dass diese Orte mit einer hohen Wahrscheinlichkeit eine Teilmenge der Gesamtheit von auswählbaren Orten bilden, kann die Eingabegeschwindigkeit stark erhöht werden, da ein Benutzer mit hoher Wahrscheinlichkeit auf der kürzeren Liste nun den von ihm gewünschten Ort finden wird.

Weiterhin ist es vorteilhaft zur Erleichterung der Orientierung des Benutzers in der ersten und in der zweiten Liste Orte in alphabetischer Reihenfolge darzustellen. In einer anderen Ausführungsform ist es möglich, in der ersten Liste Orte in alphabetischer Reihenfolge darzustellen und in der zweiten Liste die Orte in Abhängigkeit von einer Eigenschaft oder von einer zuvor getätigten Eingabe eines Benutzers zu wählen. So kann beispielsweise die erste Liste zur Auswahl eines Ortsnamens aus einer Gesamtheit alphabetisch dargestellt werden und die zweite Liste in einer Rangfolge der Auswahlwahrscheinlichkeit der Ziele dargestellt werden.

Es ist ferner vorteilhaft, die erste und die zweite Liste gleichzeitig in der Anzeige darzustellen. Hierdurch kann ein Benutzer erkennen, welche Folge die Eingabe eines weiteren Zeichens hat und wie sich die Auswahl der ihm angebotenen Listeneinträge damit gegebenenfalls verändern wird.

Es ist erfindungsgemäß vorteilhaft, dass die erste und die zweite Liste unabhängig voneinander rollbar sind. Unter der Rollbarkeit soll hierbei verstanden werden, dass ein Benutzer durch eine Bedienelementeingabe für den Fall, dass die gesamte Liste bzw. die nach der Eingabe von einer Zeichenkette noch verbleibenden Einträge nicht vollständig in der Anzeige darstellbar sind, durch eine Bedienelementeingabe auch weitere Listeneinträge zur Darstellung bringen kann, die zuvor nicht erkennbar sind. Somit kann beispielsweise ein Benutzer überprüfen, ob ein Listeneintrag beispielsweise in der kurzen, zweiten Liste vorhanden ist, oder ob er diesen Eintrag aus der umfangreicheren ersten Liste auswählen muss, selbst wenn dieser Eintrag aufgrund der Länger der zweiten Liste nicht unmittelbar angezeigt wird.

Ferner ist vorteilhaft, dem Benutzer die von ihm zuvor eingegebene Zeichenfolge gesondert darzustellen. Hierdurch kann er erkennen, welche Auswahl er getroffen hat und ob diese Auswahl gegebenenfalls korrigiert werden muss.

Weiterhin ist es vorteilhaft, bei einer weiteren Auswahl einer der Listen die Darstellung der angezeigten Listen so zu vergrößern, dass die Anzahl der dargestellten Einträge vergrößert wird. Hierdurch ist eine bessere Auswahl aus den einzelnen Listenelementen möglich. So ist es z.B. möglich, von nur einer gleichzeitigen Darstellung zweier Listen durch eine Benutzerauswahl auf eine Darstellung von nur einer der beiden Listen zu wechseln, wobei sich hierbei die für die ausgewählte Liste in der Anzeige vorhandene Fläche vergrößert.

Weiterhin ist es vorteilhaft, dass nach Auswahl eines Ortes ein Eingabefenster dargestellt wird, um weitere Informationen zu diesem Ort darzustellen oder einzugeben. Wurde beispielsweise ein Stadtname ausgewählt, so ist es nunmehr in dem weiteren Eingabefenster möglich, auch einen Straßennamen einzugeben. Weiterhin ist für den Fall, dass ein Ortsname nicht eindeutig ist, weil mehrere Orte eine gleiche Bezeichnung tragen, in dem Eingabefenster eine eindeutige Auswahl des Ortes angeboten wird.

Es ist ferner vorteilhaft, einen ersten Ort bevorzugt aus der zweiten Liste zu einer Direktauswahl anzuzeigen. Die Orte in der zweiten Liste sind hierzu z.B. bevorzugt so gewählt, dass sie eine hohe Wahrscheinlichkeit einer Auswahl aufweisen. Bevorzugt wird dann ein Ort ausgewählt, der eine besonders hohe Auswahlwahrscheinlichkeit hat. Somit kann eine weitere Listenauswahl dadurch umgangen werden, dass diese Orte nunmehr durch den Benutzer direkt ausgewählt werden können.

Besonders vorteilhaft ist eine Verwendung eines erfindungsgemäßen Verfahrens in einem Kraftfahrzeug zur Eingabe eines Fahrziels in eine Navigationsvorrichtung. Bei der Verwendung im Kraftfahrzeug steht dem Benutzer im Allgemeinen keine übliche Tastatur zur Verfügung, so dass er mit einfachen Bedienelementen eine Auswahl treffen muss. Durch die vorteilhafte erfindungsgemäße Verfahrensausgestaltung lässt sich die Eingabe eines Ortes als ein Fahrziel in die Navigationsvorrichtung beschleunigen.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Vorrichtung zur Verarbeitung einer Ortsinformation in Form eines Navigationssystems in einem Kraftfahrzeug,
Figur 2 eine Bildschirmdarstellung zur Erläuterung des erfindungsgemäßen Verfahrens zur Auswahl eines Ortes.

### Beschreibung des Ausführungsbeispiels

Das erfindungsgemäße Verfahren zur Auswahl eines Ortes kann für eine beliebige Ortsauswahl verwendet werden. So ist es z.B. möglich, einen gewünschten Ort in einen herkömmlichen Computer oder auch in einen kleinen Computer, einen sogenannten PDA, in entsprechender Weise einzugeben. Besonders vorteilhaft ist die Verwendung des erfindungsgemäßen Auswahlverfahrens eines Ortes für die Eingabe eines Fahrziels in eine Navigationsvorrichtung in einem Fahrzeug. Daher ist das erfindungsgemäße Verfahren im Folgenden am Beispiel einer Verwendung für eine Navigationsvorrichtung erläutert.

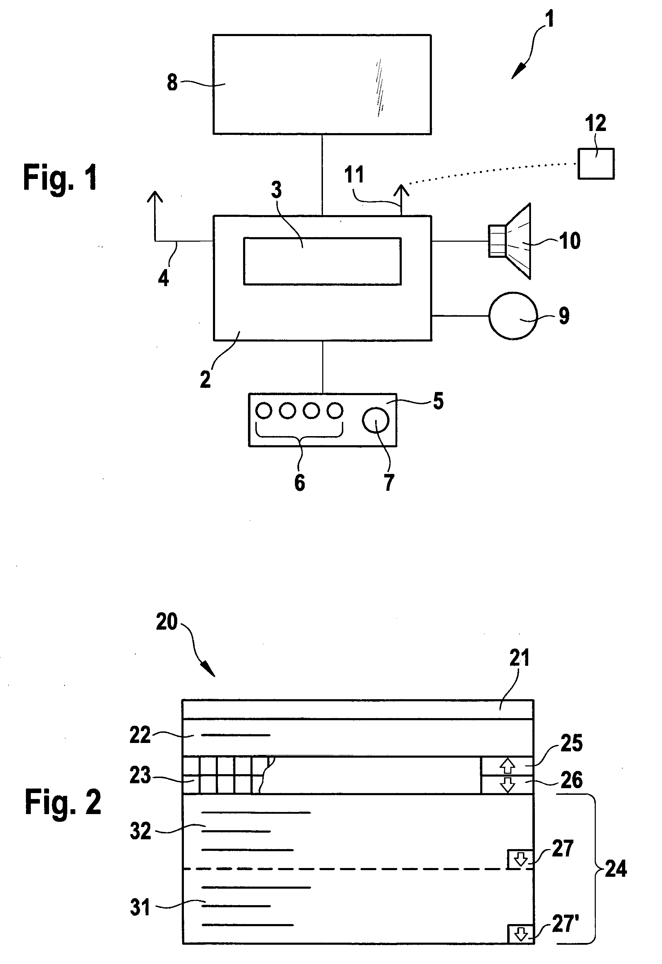

In der Figur 1 ist eine Navigationsvorrichtung 1 in einem Fahrzeug gezeigt. Eine Zentraleinheit 2 weist eine Recheneinheit 3 auf, die eine Routenberechnung vornimmt. Über eine Ortungseinheit 4, beispielsweise eine Satellitenortungseinheit, wird eine Position der Navigationsvorrichtung 1 bestimmt. In einer weiteren Ausführungsform kann eine Startposition auch über eine Eingabe ausgewählt werden. Über eine Bedieneinheit 5 mit Drucktasten 6 und/oder Drehelementen 7 wählt ein Benutzer ein Fahrziel aus einer Auswahl aus, die ihm in einer Anzeige 8 angeboten wird. Die Orte, die der Fahrer als ein Fahrziel auswählen kann, sind bevorzugt in einem Speicher 9 abgelegt. Nach der Eingabe des Fahrziels berechnet die Recheneinheit 3 unter Zugriff auf eine digitale Karte, die bevorzugt ebenfalls in dem Speicher 9 abgelegt ist, eine Fahrtroute zu dem eingegebenen Fahrziel. Fahrhinweise können optisch über die Anzeige 8 und/oder akustisch über einen Lautsprecher 10 an den Fahrer des Fahrzeugs ausgegeben werden. In einer weiteren Ausführungsform ist es auch möglich, über eine Funkschnittstelle 11 eine Datenverbindung zu einem Rechner 12 außerhalb des Fahrzeugs herzustellen. Der Rechner 12 kann die Routenberechnung übernehmen und eine Fahrtroute an das Fahrzeug und die Navigationsvorrichtung 1 zurücksenden. Ebenfalls ist es möglich, dass für die Eingabe des Fahrziels zuvor der Rechner 12 der Navigationsvorrichtung 1 eine Liste möglicher Orte zur Auswahl eines Fahrziels zur Verfügung gestellt hat.

In der Figur 2 ist ein Beispiel für eine Darstellung 20 in der Anzeige 8 gezeigt. Die Darstellung 20 dient dabei dazu, ein Fahrziel auszuwählen. In einem Hinweisfeld 21 werden Bedienhinweise an den Benutzer ausgegeben, z.B. nunmehr eine Fahrzieleingabe durchzuführen. In einem Eingabefeld 22 wird die Eingabe einer bisher von einem Benutzer eingegebenen Zeichenfolge dargestellt. Eine Zeichenfolge kann dabei aus einem oder mehreren Buchstaben bestehen. Als Buchstaben sollen in diesem Zusammenhang auch Sonderzeichen wie z.B. Bindestriche oder gegebenenfalls Ziffern verstanden werden. In einer bevorzugten Ausführungsform wird in dem Eingabefeld 22 nicht nur die bisher eingegebene Zeichenfolge dargestellt, sondern diese Zeichenfolge wird zudem um weitere Zeichen derart erweitert, dass in dem Eingabefeld 22 ein Fahrziel-Vorschlag dem Benutzer angeboten wird. Über eine unmittelbare Auswahl über die Bedieneinheit 5 kann der Benutzer das in dem Eingabefeld 22 gezeigte Fahrziel auswählen.

In einem Buchstabenfeld 23, das vereinfacht dargestellt ist, werden dem Benutzer eine Vielzahl von Buchstaben dargestellt. Er kann über die Bedieneinheit 5 einen dieser Buchstaben als ein nächstes Zeichen auswählen. Dieses Zeichen wird der Zeichenfolge, die er zuvor eingegeben hat, hinzugefügt. Hat der Benutzer bisher noch kein Zeichen eingegeben, kann er über das Buchstabenfeld 23 das erste Zeichen der Zeichenfolge auswählen.

In einem Anzeigebereich 24 ist eine erste Liste 31 und oberhalb der ersten Liste eine zweite Liste 32 dargestellt. In den Listen 31, 32 sind die Namen von Orten dargestellt, deren Anfang mit der von dem Benutzer bisher eingegebenen Zeichenfolge übereinstimmen muss. Bei der hier beispielhaft gezeigten Ausführungsform werden jeweils drei Listeneinträge der ersten und der zweiten Liste 31, 32 in der Anzeige 8 dargestellt.

Für den Fall, dass ein Benutzer bereits wenigstens einen ersten Buchstaben einer Zeichenkette eingegeben hat, hat er im Folgenden die Möglichkeit zur Auswahl: Der Benutzer kann einerseits einen weiteren Buchstaben der Zeichenkette eingeben und somit die Anzahl der entsprechend aus den beiden Listen 31, 32 auswählbaren Ortsnamen verringern. Er kann jedoch auch eine der beiden Listen auswählen. In diesem Fall erlöschen alle Darstellungen in der Anzeige bis auf das Hinweisfeld 21 und es wird stattdessen die jeweils ausgewählte Liste dargestellt. Anstelle von nur drei Einträgen können nunmehr beispielsweise bis zu zehn Einträge der Liste in der Anzeige 8 dargestellt werden. Auch für diesen Fall ist es möglich, dass die Liste mehr Einträge als die Darstellung umfasst, dass also die Gesamtheit der Orte, die mit der zuvor eingegebenen Zeichenfolge übereinstimmt, die Anzahl der gleichzeitig darstellbaren Listenelemente übersteigt. In diesem Fall ist es bevorzugt mit dem Drehelement 7 möglich, durch die Liste zu rollen, so dass beispielsweise durch Drehen des Drehelementes 7 nach links die Liste nach unten verschoben wird und durch ein Drehen des Drehelements 7 nach rechts die Liste nach oben verschoben wird und jeweils weitere nachfolgende bzw. vorausgehende Einträge sichtbar werden.

Mit einem ersten Eingabefeld 25 wird die zweite Liste 32 für eine Gesamtdarstellung ausgewählt. Mit der Auswahl eines zweiten Eingabefeldes 26 wird die erste Liste 31 für eine Gesamtdarstellung ausgewählt. Durch ein Symbol 27, 27' kann angezeigt werden, dass weitere Listeneinträge folgen. Ein Betrachter weiß somit, dass die jeweils drei dargestellten Orte nicht den gesamten Listeninhalt repräsentieren.

Hat sich ein Benutzer nun für einen der Einträge aus der jeweils ausgewählten Liste entschieden, so erscheint nach einer entsprechender Auswahl statt der Liste ein weiteres Eingabefenster, in dem der Benutzer weitere Eingaben vornehmen kann. Sollte es sich bei dem gewählten Ort beispielsweise um die Bezeichnung einer Stadt oder einer Gemeinde handeln, kann der Benutzer nun in einem nachfolgenden Eingabeschritt, möglicherweise unter Nutzung des gleichen Verfahrens entsprechend der Auswahl der Stadt oder der Gemeinde, einen Straßennamen bzw. eine Hausnummer eingeben. Mit der Auswahl eines weiteren Auswahlfeldes kann zudem die Möglichkeit angeboten werden, eine Zielführung zu starten und also eine Routenberechnung durch die Navigationsvorrichtung 1 zu beginnen.

In einer weiteren Ausführungsform ist es möglich, dass ein Benutzer bereits bei der Darstellung gemäß der Figur 2 beispielsweise durch eine Drehung des Drehelementes 7 unmittelbar in die Darstellung der Listen 31, 32 wechseln kann und einen dort dargestellten Ort auswählen kann. Ferner kann der Benutzer zunächst in eine der beiden Listen 31, 32 wechseln und dann durch die Listen unabhängig voneinander rollen und damit die Listen unabhängig voneinander durchsuchen.

In dem Speicher 9 bzw. in dem externen Rechner 12 ist bevorzugt eine Gesamtheit von auswählbaren Orten abgelegt, die die Grundmenge der Orte der ersten Liste bildet. Bevorzugt ist für einen Ort jeweils eine Ortskoordinate gespeichert, die für die Routenberechnung verwendet werden kann. Bei der hier dargestellten Ausführungsform dient die erste Liste als eine alphabetisch geordnete Liste aller auswählbaren Orte, die bevorzugt auch alphabetisch sortiert angezeigt wird. Für die Darstellung eines Ortes aus der Grundmenge in der ersten Liste muss nun zusätzlich dazu, dass ein Eintrag in der Grundmenge enthalten ist, ein Anfang eines jeweiligen Ortsnamens mit der zuvor eingegebenen Zeichenfolge übereinstimmen. Die Menge der nach der Zeicheneingabe noch auswählbaren und damit darstellbaren Orte der ersten Liste ändert sich, d.h. verkleinert sich im Allgemeinen, dabei dynamisch entsprechend weiteren eingegeben Zeichen der Zeichenfolge. D.h. die auswählbaren und damit in der ersten Liste darstellbaren Orte sind eine Teilmenge der Grundmenge der ersten Liste, wobei die Eingabe der Zeichenfolge die Teilmenge und damit die Listeneinträge, also die in der ersten Liste 31 in der Anzeige 8 darzustellenden Orte, bestimmt. Hierbei können gegebenenfalls nicht alle darzustellenden Orte in der ersten Liste 31 in der Anzeige 8 gleichzeitig dargestellt werden.

Die zweite Liste geht in einer bevorzugten Ausführungsform als Grundmenge von einer eine Teilmenge der gesamten, auswählbaren Orte aus, die ungeachtet einer Zeicheneingabe schon vor der Zeicheneingabe gegenüber der Grundmenge der ersten Liste eingeschränkt ist und damit eine Teilmenge der Grundmenge der ersten Liste bildet. Welche Orte zu dieser Teilmenge gehören, ist bevorzugt in dem Speicher 9 abgelegt. Entsprechende Orte können in einer Liste gespeichert sein oder es kann auch eine Zuordnung zu den einzelnen Orten abgelegt sein.

Für die Grundmenge der Orte der zweiten Liste werden bevorzugt nur diejenigen Orte ausgewählt, die eine höhere Wahrscheinlichkeit einer Auswahl durch den Benutzer haben. Diese höhere Wahrscheinlichkeit kann nach verschiedenen Kriterien festgelegt werden. Für die Darstellung in der Anzeige müssen auch die Orte der Grundmenge der der zweiten Liste 32 stets mit der zuvor eingegebenen Zeichenfolge übereinstimmen.

Für die Grundmenge der zweiten Liste, aus der unter Berücksichtigung der eingegebenen Zeichenfolge die darzustellenden Orte der zweiten Liste 32 bestimmt werden, können z.B. die letzten von einem Benutzer eingegebenen Fahrziele berücksichtigt werden, z.B. die letzten zehn Ziele. Alternativ oder ergänzend können Eigenschaften der Orte berücksichtigt werden. So können Städte über einer vorgegebenen Einwohnerzahl, beispielsweise Städte mit einer Einwohnerzahl von über 50.000 Einwohnern, in die Grundmenge der zweiten Liste aufgenommen werden. Ebenfalls ist es möglich, beispielsweise bei einem Datensatz, der Deutschland und Europa umfasst, nur Orte in Deutschland in die Grundmenge der zweiten Liste aufzunehmen. Weiterhin können besondere Orte, insbesondere Orte mit einer besonderen touristischen Relevanz, in die Grundmenge der zweiten Liste aufgenommen werden. Ferner ist es möglich, dass ein Benutzer einen Ort durch eine entsprechende Auswahl, auch wenn dieser Ort zuvor noch nicht ausgewählt worden ist und kein anderer Hinweis auf diesen Ort hindeutet, manuell in die Grundmenge der zweiten Liste aufnimmt. Bezüglich einer Auswahl von Straßen, die ebenfalls als Orte angesehen werden, kann als eine Eigenschaft die Länge der Straße in der Weise berücksichtigt werden, dass nur Straßen über einer vorgegebenen Länge oder nur eine längste Straße mit diesem Namen in die Grundmenge der zweiten Liste aufgenommen wird.

Ferner ist es möglich, die aktuelle Position für die Bildung der Grundmenge der zweiten Liste mit zu berücksichtigen. Damit ist auch eine dynamische ortsabhängige oder gegebenenfalls auch zeitabhängige Bildung der Grundmenge der zweiten Liste möglich. So können z.B. Orte in einem Umkreis von 20 km um die Fahrzeugposition herum vollständig in die zweite Liste aufgenommen werden. Ferner ist es in einer anderen Ausführungsform auch möglich, bei Orten, die gleichlautend oder zumindest sehr ähnlich sind, jeweils denjenigen Ort mit der kleineren Entfernung zum aktuellen Standort in die Grundmenge aufzunehmen. Ferner ist es möglich, zu zählen, wie oft ein Ziel bereits von dem Fahrzeug angefahren wurde. Fahrziele, die beispielsweise mehr als zehn Mal angefahren wurden, werden ebenfalls in die Grundmenge der zweiten Liste 32 mit aufgenommen. Ferner ist es auch möglich, dass Orte wieder aus der Grundmenge der zweiten Liste gelöscht werden. Beispielsweise ist es möglich, dass Orte, die als letzte Ziele gespeichert sind, bzw. die sehr oft angefahren wurden, nach beispielsweise einem halben Jahr wieder aus der Liste gelöscht werden, wenn sie zwischenzeitlich nicht erneut angefahren wurden.

Die Darstellung der zweiten Liste geht auf eine Teilmenge der Grundmenge der zweiten Liste zurück, wobei die Teilmenge der zweiten Liste durch die gleiche, zuvor eingegebene Zeichenfolge bestimmt wird, mit der auch die Anfänge der Namen der ersten Liste übereinstimmen müssen. Die Orte der zweiten Liste 32 können ebenso wie die Orte in der ersten Liste 31 alphabetisch sortiert angezeigt werden. In einer weiteren Ausführungsform ist es auch möglich, die Orte in der zweiten Liste 32 unter Berücksichtigung der zuvor eingegebenen Zeichenfolge nach der Entfernung von der aktuellen Position des Fahrzeugs aus geordnet anzuzeigen.

Die Auswahl einer der beiden Listen 31, 32 erfolgt bevorzugt durch den Benutzer. Für den Fall, dass ein Ort der letzten zehn Ziele in der zweiten Liste 32 enthalten ist und dass bereits die ersten beispielsweise drei Zeichen mit diesem Ort übereinstimmen, so wird in einer bevorzugten Ausführungsform automatisch in die Gesamtdarstellung der zweiten Liste 32 gewechselt. Sollte ein anderer Ort gewünscht werden, kann diese Auswahl zurückgesetzt werden.

In dem bisher gezeigten Ausführungsbeispiel stellt die Grundmenge der Orte, die in der zweiten Liste 32 dargestellt werden, eine Teilmenge der Grundmenge der ersten Liste 31 dar. In einer weiteren Ausführungsform ist es auch möglich, dass die beiden Grundmengen disjunkt sind. So können beispielsweise in der ersten Liste 31 Fahrziele einer ersten Kategorie, beispielsweise Restaurantnamen, aufgeführt werden, während in der zweiten Liste 32 Orte einer anderen Kategorie, beispielsweise Museen, aufgeführt werden. Auch in diesem Fall gilt, dass die gezeigten Einträge jeweils mit der zuvor eingegebenen Zeichenfolge übereinstimmen müssen.

Im Folgenden ist ein Textbeispiel für ein erfindungsgemäßes Eingabeverfahren erläutert. Bei dem vorliegenden Beispiel hat ein Benutzer als einen ersten Buchstaben der Zeichenfolge den Buchstaben "D" ausgewählt. In dem Hinweisfeld 21 erscheint der Hinweise "Bitte Stadt eingeben". In dem Eingabefeld erscheint der Ortsname "Dortmund". Der zweite Buchstabe, das "O", wird nun durch eine Anzeigemarke hervorgehoben. Hierdurch wird deutlich, dass diese Stelle durch die nächste Eingabe aus dem Buchstabenfeld 23 besetzt wird.

Dortmund stellt die Stadt mit der größten Einwohnerzahl mit dem Anfangsbuchstaben D dar. Daher wurde Dortmund für das Eingabefeld 22 ausgewählt.

In der Darstellung der zweiten Liste 32 erscheinen nun übereinander die Ortsnamen
DORTMUND;
DREIEICH;
DRESDEN.
In der Darstellung der ersten Liste erscheinen die ersten Einträge
D'HORN;
D.EIS, ALBSHEIM A.;
D.EIS, MÜHLHEIM A. übereinander angeordnet.

Aufgrund der Sonderzeichen an der zweiten Position werden diese Orte im Alphabet vorne aufgeführt. Der Ort "DREIEICH" erscheint zwischen Dortmund und Dresden deshalb, da er vom Fahrer vor kurzem angefahren wurde. Die Ortsgrenze für eine Aufnahme in eine zweite Liste ist im vorliegenden Fall auf 200.000 Einwohner festgelegt, so dass beispielsweise Darmstadt, obwohl im Alphabet vor Dortmund, in der ersten Liste nicht erscheint.

Im Folgenden gibt der Benutzer einen zweiten Buchstaben der Zeichenfolge ein, ein "R". In der Darstellung der ersten Liste ändert sich der Eintrag auf die Orte:
DRABENDERHÖHE;
DRABEL;
DRACHENBERG.
In der Darstellung der zweiten Liste ändert sich der Ortseintrag auf die beiden Orte:
DREIEICH;
DRESDEN.

Das Eingabefeld 22 weist nun den Ortsnamen "DREIEICH" auf. Der Benutzer kann nun entweder den Ort Dreieich unmittelbar auswählen oder über die Eingabefelder 25, 26 eine der beiden Listen auswählen oder einen weiteren Buchstaben eingeben. Für den Fall, dass er über das zweite Eingabefeld 26 die erste Liste auswählt, ändert sich die Darstellung in der Anzeige 8. In dem Hinweisfeld 21 wird der Hinweis: "Bitte Eintrag wählen" dargestellt. Darunter erscheinen die Orte: "DRABENDERHÖHE, DRABEL, DRACHENBERG, DRACHHAUSEN, DRACKENSTEDT, DRAHNSDORF, DRAKENBURG, DRANGSTEDT, DRANSE, DRANSFELD". Der Benutzer kann nun beispielsweise über das Drehelement 7 einen dieser Orte auswählen. Wählt er beispielsweise DRABEL aus, so erscheint statt der Liste eine Eingabemaske, die in dem Hinweisfeld 21 mit dem Hinweis "Zieleingabe" beschriftet wird. Dem Benutzer wird hierbei beispielsweise noch einmal das Land, in diesem Fall Deutschland, angezeigt, in dem die Stadt Drabel liegt. Über ein Eingabefeld kann der Benutzer nun Straße und Hausnummer eingeben, die er in Drabel anfahren will. Ein weiteres Feld erlaubt es ihm, über dessen Auswahl die Zielführung zu starten.

Hat der Benutzer stattdessen die zweite Liste gewählt, so werden ihm die verbleibenden Einträge der zweiten Liste angezeigt, die nur noch die beiden Orte Dreieich und Dresden umfassen. Der Benutzer kann nun in gleicher Weise einen dieser Orte für eine genauere Zieleingabe bzw. das Starten der Zielführung zu einem der Orte auswählen.

## Patentansprüche

1. Verfahren zur Auswahl eines Ortes, wobei in einer Anzeige zur Auswahl von Orten eine erste Liste und eine zweiten Liste von Orten zur Auswahl des Ortes aus einer der Listen dargestellt werden, wobei sich die jeweiligen Grundmengen der Orte, aus denen jeweils die Einträge der Listen bestimmt werden, unterscheiden, **dadurch gekennzeichnet, dass** der Anfang der Namen der Orte in beiden dargestellten Listen jeweils mit derselben, zuvor eingegebenen Zeichenkette übereinstimmt., und dass die erste und die zweite Liste unabhängig voneinander rollbar sind.

2. Verfahren nach Anspruch 1, **dadurch gekennzeichnet, dass** die Grundmenge der Orte, aus der die Einträge in der zweiten Liste bestimmt werden, eine Teilmenge der Grundmenge der Orte ist, aus der die Einträge in der ersten Liste bestimmt werden.

3. Verfahren nach einem der vorhergehenden Ansprüche, **dadurch gekennzeichnet, dass** die Grundmenge der Orte wenigstens einer Liste in Abhängigkeit von einer Eigenschaft des jeweiligen Ortes und/oder von einer getätigten Eingabe eines Benutzers festgelegt wird.

4. Verfahren nach einem der vorhergehenden Ansprüche **dadurch gekennzeichnet, dass** in der ersten und in der zweiten Listen Orte in einer alphabetischen Reihenfolge dargestellt werden.

5. Verfahren nach einem der Anspruche 1-3, **dadurch gekennzeichnet, dass** in der ersten Liste Orte in alphabetischer Reihenfolge dargestellt werden und dass die Orte in der zweiten Liste in einer Reihenfolge in Abhängigkeit von einer Eigenschaft der jeweiligen Orte und/oder einer zuvor getätigten Eingabe eines Benutzers dargestellt werden.

6. Verfahren nach einem der vorhergehenden Ansprüche, **dadurch gekennzeichnet, dass** die erste und die zweite Liste gleichzeitig in der Anzeige dargestellt werden.

7. Verfahren nach einem der vorhergehenden Ansprüche, **dadurch gekennzeichnet, dass** die zuvor eingegebene Zeichenfolge gesondert dargestellt wird.

8. Verfahren nach einem der vorhergehenden Ansprüche, **dadurch gekennzeichnet, dass** für eine weitere Auswahl eines Ortes eine der Listen derart ausgewählt werden kann, dass die Anzahl der dargestellten Einträge der ausgewählten Liste vergrößert wird.

9. Verfahren nach einem der vorhergehenden Ansprüche, **dadurch gekennzeichnet, dass** nach Auswahl eines Ortes ein Eingabefenster zur Eingabe weiterer Informationen und/oder Befehle zu dem Ort dargestellt wird.

10. Verfahren nach einem der vorhergehenden Ansprüche, **dadurch gekennzeichnet, dass** ein erster Ort aus der zweiten Liste zu einer Direktauswahl angezeigt wird.

11. Verwendung eines Verfahrens nach einem der vorhergehenden Ansprüche zur Eingabe eines Fahrziels in eine Navigationsvorrichtung insbesondere in einem Kraftfahrzeug.

12. Vorrichtung zur Verarbeitung einer Ortsinformation mit einer Anzeige (8) zur Darstellung auswählbarer Orte, mit Bedienmitteln (5, 6, 7) zur Eingabe einer Zeichenfolge und zur Auswahl eines in der Anzeige (8) dargestellten Ortes, mit einem Speicher (9) zur Speicherung einer Vielzahl von Orten und mit einer Recheneinheit (3) zur Darstellung von wenigstens zwei Listen (31, 32) in der Anzeige (8), wobei sich die jeweiligen Grundmenge der Orte, aus denen die Einträge der Listen jeweils bestimmt werden, unterscheiden, **dadurch gekennzeichnet, dass** zumindest der Anfang der Namen der Orte in beiden Listen (31,32) jeweils mit derselben, zuvor eingegebenen Zeichenkette übereinstimmt, und dass die erste und die zweite Liste unabhängig voneinander rollbar sind.

## Claims

1. Method for selecting a location, a first list and a second list of locations being shown in a display for the selection of locations in order to select the location from one of the lists, the respective basic sets of the locations from which the entries in the lists are respectively determined being different, **characterized in that** the beginning of the names of the locations in the two lists shown respectively agree with the same, previously input character string, and **in that** the first and the second list can be scrolled independently of one another.

2. Method according to Claim 1, **characterized in that** the basic set of the locations from which the entries in the second list are determined is a subset of the basic set of the locations from which the entries in the first list are determined.

3. Method according to one of the preceding claims, **characterized in that** the basic set of the locations of at least one list is determined as a function of a characteristic of the respective location and/or of an input made by a user.

4. Method according to one of the preceding claims, **characterized in that** locations are shown in alphabetical order in the first and in the second lists.

5. Method according to one of Claims 1-3, **characterized in that** locations are shown in alphabetical order in the first list, and **in that** the locations in the second list are shown in a sequence as a function of a characteristic of the respective locations and/or of an input previously made by a user.

6. Method according to one of the preceding claims, **characterized in that** the first and the second lists are shown simultaneously in the display.

7. Method according to one of the preceding claims, **characterized in that** the previously input character string is shown separately.

8. Method according to one of the preceding claims, **characterized in that** for a further selection of a location one of the lists can be selected in such a way that the number of the entries shown for the selected list is increased.

9. Method according to one of the preceding claims, **characterized in that** after selection of a location an input window for inputting further information and/or commands relating to the location is shown.

10. Method according to one of the preceding claims, **characterized in that** a first location from the second list is shown in relation to a direct selection.

11. Use of a method according to one of the preceding claims for inputting a travel destination into a navigation device, in particular in a motor vehicle.

12. Device for processing an item of location information, having a display (8) for showing selectable locations, having operating means (5, 6, 7) for inputting a character string and for selecting a location shown in the display (8), having a memory (9) for storing a multiplicity of locations, and having an arithmetic logic unit (3) for showing at least two lists (31, 32) in the display (8), the respective basic sets of the locations from which the entries in the lists are respectively determined being different, **characterized in that** at least the beginning of the names of the locations in the two lists (31, 32) respectively agree with the same, previously input character string, and **in that** the first and the second list can be scrolled independently of one another.

## Revendications

1. Procédé de sélection d'un lieu, dans lequel
une première liste et une deuxième liste de lieux sont présentées sur un affichage de sélection de lieux pour sélectionner le lieu dans l'une des listes,
le nombre de lieux à partir desquels les entrées des listes sont définies étant différent pour chacune des listes,
**caractérisé en ce que**
le début du nom des lieux des deux listes présentées correspondant à une même chaîne de caractères préalablement introduite et
**en ce que** la première et la deuxième liste peuvent être déroulées indépendamment l'une de l'autre.

2. Procédé selon la revendication 1, **caractérisé en ce que** le nombre des lieux à partir desquels les entrées de la deuxième liste sont définies représente une partie du nombre des lieux à partir desquels les entrées de la première liste sont définies.

3. Procédé selon l'une des revendications précédentes, **caractérisé en ce que** le nombre des lieux d'au moins une liste est défini en fonction d'une propriété des lieux concernés et/ou d'une entrée effectuée par l'utilisateur.

4. Procédé selon l'une des revendications précédentes, **caractérisé en ce que** les lieux sont présentés dans l'ordre alphabétique dans la première et dans la deuxième liste.

5. Procédé selon l'une des revendications 1 à 3, **caractérisé en ce que** dans la première liste, les lieux sont présentés dans l'ordre alphabétique et **en ce que** dans la deuxième liste, les lieux sont présentés dans un ordre qui dépend d'une propriété de chaque lieu et/ou d'une entrée préalablement effectuée par l'utilisateur.

6. Procédé selon l'une des revendications précédentes, **caractérisé en ce que** la première et la deuxième liste sont présentées simultanément sur l'affichage.

7. Procédé selon l'une des revendications précédentes, **caractérisé en ce que** la succession de caractères préalablement introduite est présentée séparément.

8. Procédé selon l'une des revendications précédentes, **caractérisé en ce que** pour poursuivre la sélection d'un site, une des listes peut être sélectionnée de manière à augmenter le nombre des éléments présentés dans la liste sélectionnée.

9. Procédé selon l'une des revendications précédentes, **caractérisé en ce qu'**après la sélection d'un lieu, une fenêtre d'introduction permettant d'introduire d'autres informations et/ou commandes concernant le lieu est présentée.

10. Procédé selon l'une des revendications précédentes, **caractérisé en ce qu'**un premier lieu de la deuxième liste est affiché pour être sélectionné directement.

11. Utilisation d'un procédé selon l'une des revendications précédentes pour introduire une destination dans un dispositif de navigation.

12. Dispositif de traitement d'une information de lieu, présentant
un affichage (8) qui présente des lieux qui peuvent être sélectionnés,
des moyens de commande (5, 6, 7) qui permettent d'introduire une succession de caractères et de sélectionner un lieu présenté sur l'affichage (8),
une mémoire (9) qui conserve plusieurs lieux et une unité de calcul (3) qui présente au moins deux listes (31, 32) sur l'affichage (8),
le nombre de lieux à partir desquels les entrées des listes sont définies étant différent pour chacune des listes,
**caractérisé en ce que**
au moins le début du nom des lieux des deux listes (31, 32) présentées correspondant à une même chaîne de caractères préalablement introduite et
**en ce que** la première et la deuxième liste peuvent être déroulées indépendamment l'une de l'autre.
